# EUROPEAN PATENT APPLICATION

(11) **EP 4 434 936 A1**
(43) Date of publication of application: **25.09.2024**
(21) Application number: 22895728.8
(22) Date of filing: 21.11.2022
(51) Int. Cl.: C01B 11/04, B01D 3/10

(54) **METHOD AND DEVICE FOR PRODUCING PURIFIED HYPOCHLOROUS ACID AQUEOUS SOLUTION, AND PURIFIED HYPOCHLOROUS ACID AQUEOUS SOLUTION**

(30) Priority: 19.11.2021 JP 2021188953
(71) Applicant: Nipro Corporation, Settsu-shi, Osaka 566-8510 (JP)
(72) Inventor: SANO, Yoshihiko, Settsu-shi, Osaka 566-8510 (JP); SANO, Kazuhiko, Settsu-shi, Osaka 566-8510 (JP); KAWAMURA, Naohisa, Settsu-shi, Osaka 566-8510 (JP); SUDO, Yoshinaga, Settsu-shi, Osaka 566-8510 (JP); SHIGE, Yoichi, Amagasaki-shi, Hyogo 660-8567 (JP); YAMAKAWA, Yosuke, Amagasaki-shi, Hyogo 660-8567 (JP)
(74) Representative: M. Zardi & Co S.A.
(86) International application number: PCT/JP2022/043061
(87) International publication number: WO 2023/090447

(57) **Abstract**

A method for producing a purified hypochlorous acid aqueous solution, which comprises a step of extracting hypochlorous acid by subjecting a hypochlorous acid-containing water solution (1A) as a source liquid to vacuum evaporation at a temperature of 40°C or less, and a vacuum evaporation apparatus (100) comprising a heater (3), an evaporation can (4), and a condenser (5) to purify the hypochlorous acid-containing water solution (1A), characterized in that the vacuum evaporation apparatus (100) comprises a mechanism to control an evaporation temperature to between 10°C and 40°C.

## Description

### TECHNICAL FIELD

The present invention relates to a method and an apparatus for producing a high-purity hypochlorous acid aqueous solution, and a purified hypochlorous acid aqueous solution.

### BACKGROUND ART

Since 2020, coronaviruses have been spreading around the world and threatening people's lives. Hypochlorous acid water has shown activity even against coronaviruses and is expected to provide sterilization performance by spatial spraying, but there are concerns about the effects on the human body and corrosion of sprayers due to impurities contained in hypochlorous acid water.

As production methods for hypochlorous acid (HOCI), (1) a method of injecting chlorine gas into water (see Formula (I)), (2) a method of adding (inorganic, organic) acids to a sodium hypochlorite solution (NaOCl) (see Formula (II) and (II')), and (3) a method of subjecting dilute hydrochloric acid (HCl: Non-diaphragm method), chlorides such as sodium chloride and the like (NaCl and the like: Diaphragm method) to electrolysis (see Formula (III) and (III') are widely known. A problem common to such production methods is that the presence ratio (molar ratio) of acidic substances such as hydrogen chloride and the like or acid and alkaline neutralizers to hypochlorous acid is generally 1:1 or more. Therefore, unnecessary impurity ions are included in equivalent amounts or more.

H₂O+Cl₂ -> HCl+HOCl Formula (I)

NaOCl+HCl -> HOCl+NaCl Formula (II)

NaOCl+CH₃COOH → HOCl+CH₃COONa Formula (II')

HCl+H₂O → HOCl+H₂ Formula (III)

2NaCl+3H₂O -> HCl+HOCl+2NaOH+H₂ Formula (III')

Moreover, slightly acidic hypochlorous acid water produced by dilute hydrochloric acid in (3) described above (Formula (III)) shows slight acidity due to the neutralization reaction of hydrochloric acid with a salt of alkaline metals, alkaline earth metals such as carbonates and the like that are hardness components in source water (see Formula (IV)), so that the hardness in the source water needs to be generally 30 mg/L or more.

2HCl+Ca(CO₃)₂ → CaCl₂+2HCO₃ Formula (IV)

Generally, hypochlorous acid is an unstable substance and is said to deactivate immediately, but actually it does not deactivate rapidly unless supply of external energy such as heat, ultraviolet light, and the like, or alter of the chemical equilibrium with coexisting ions, so that it shows a gradual decay curve due to the disproportionation reaction. In a case that unnecessary impurity ions such as hydrogen chloride, which is a factor lowering the pH, undecomposed salt derived from the source liquid, and the like are included in a large amount, these are factors accelerating the deactivation (decomposition) of hypochlorous acid. Chlorine is most stable in its chlorine ion (Cl⁻) state, and through the disproportionation reaction, hypochlorous acid (HOCl) gradually becomes hydrogen chloride (HCl), and chlorous acid (HClO₂), chloric acid (HClO₃) (see the following Formula (V) and (VI)). Then, when the pH of the solution is 5 or less, the activity of hydrogen chloride (HCl) increases, and the disproportionation reaction is accelerated.

2HOCl -> HCl+HClO₂ Formula (V)

HOCl+HClO₂ → HCl+HClO₃ Formula (VI)

A method of separating hypochlorous acid from alkaline metal chlorides or alkaline earth metal chlorides by an evaporation method to address these problems is disclosed in Patent document 1. Specifically, in Patent document 1, thin-film distillation is performed at 60°C, and hypochlorous acid water including 0.46 mol/L hypochlorous acid, 0.48 mol/L sodium chloride, and 0.04 mol/L chlorine is used to obtain hypochlorous acid water including a 55% yield of hypochlorous acid, and having the concentrations of sodium chloride and chlorine of 0.003 mol/L or less and 0.003 mol/L or less, respectively.

Moreover, Patent document 2 discloses producing hypochlorous acid water not substantially including impurity ions other than hypochlorous acid using a 2-diaphragm, 3-chamber electrolytic tank separating an anode chamber, a cathode chamber and a middle chamber by diaphragms, respectively, which middle chamber is provided between the anode chamber and the cathode chamber and includes non-electrolyte.

### PRIOR ART DOCUMENT

### Patent Document

Patent document 1: JPH10-53401A
Patent document 2: JP2009-72755A

### SUMMARY OF THE INVENTION

### PROBLEM TO BE SOLVED BY THE INVENTION

Tests by the present inventors have revealed that, when separating hypochlorous acid from ions by an evaporation method, the concentration of sodium chloride being a source liquid could be reduced to 1/10,000 or less (for example, NaCl 1,000 mg/L to 0.02 mg/L=1/50,000). However, with the method of Patent document 1, there are concerns about the effect of the evaporation temperature for evaporation, the decomposition of hypochlorous acid due to the phase change from liquid to gas, the decrease in the pH of a hypochlorous acid solution due to the presence of chlorine gas, and the like.

Moreover, with the method of Patent document 2, there is a problem that, when trying to increase the concentration of hypochlorous acid, the pH decreases, resulting in an aqueous solution with a high total chlorine ion content, and the concentration of hypochlorous acid decreases during storage. Moreover, when, to reduce the amount of hydrogen chloride in the aqueous solution, sodium hydroxide, sodium hydrogen carbonate, and the like are used to neutralize hydrogen chloride, undecomposed chlorides such as NaCl and the like increase.

Therefore, a problem of the present invention is to provide a high-purity purified hypochlorous acid aqueous solution with a very small content of impurity ions relative to the concentration of hypochlorous acid.

### MEANS TO SOLVE THE PROBLEM

As a result of the present inventors studying the above-described problems, it has been found that, when a hypochlorous acid-containing water solution was subjected to vacuum evaporation, by setting a temperature in the above-mentioned vacuum evaporation to 40°C or less, a high-purity purified hypochlorous acid aqueous solution with a very small content of impurity ions relative to the concentration of hypochlorous acid could be provided.

In other words, the present invention relates to:
[1] A method for producing a purified hypochlorous acid aqueous solution, which comprises a step of extracting hypochlorous acid by subjecting a hypochlorous acid-containing water solution as a source liquid to vacuum evaporation at a temperature of 40°C or less,
[2] The method according to [1] described above, wherein pH of the hypochlorous acid-containing water solution being the source liquid is between 5.0 and 8.6, preferably between 5.0 and 7.5, more preferably between 5.0 and 6.5, and further preferably between 5.8 and 6.3,
[3] The method according to [1] or [2] described above, wherein a temperature of the vacuum evaporation is between 10°C and 40°C,
[4] The method according to [3] described above, wherein the temperature of the vacuum evaporation is between 10°C and 30°C, preferably between 10°C and 15°C,
[5] The method according to any one of [1] to [4] described above, wherein a concentration of hypochlorous acid in the hypochlorous acid-containing water solution being the source liquid is 10,000 ppm or less, preferably between 20 ppm and 10,000 ppm, more preferably between 20 ppm and 1,000 ppm, and further preferably between 500 ppm and 800 ppm,
[6] A vacuum evaporation apparatus comprising a heater, an evaporation can, and a condenser to purify a hypochlorous acid-containing water solution, characterized in that the vacuum evaporation apparatus comprises a mechanism to control an evaporation temperature to between 10°C and 40°C, preferably between 10°C and 30°C, and more preferably between 10°C and 15°C,
[7] The vacuum evaporation apparatus according to [6] described above, comprising an after-condenser after the condenser, and
[8] A purified hypochlorous acid aqueous solution obtained by vacuum evaporation, wherein a pH is 6.5 or less, preferably between 5.8 and 6.5, a concentration of hypochlorous acid in the aqueous solution is between 40 ppm and 10,000 ppm, preferably between 50 ppm and 1,000 ppm, and a concentration of impurity ions in the aqueous solution is 5.0 ppm or less, preferably 0.05 ppm or less.

### EFFECTS OF THE INVENTION

The present invention makes it possible to provide a high-purity purified hypochlorous acid aqueous solution with a very small content of impurity ions relative to the concentration of hypochlorous acid by manufacturing a purified hypochlorous acid aqueous solution with the temperature of the vacuum evaporation of a hypochlorous acid-containing water solution being set to 40°C or less.

Moreover, such a purified hypochlorous acid aqueous solution is slow in deactivating hypochlorous acid being the main component of disinfection, making it possible to suppress the side reaction (effect) such as irritation on living organisms, corrosion, and the like to the equivalent level or less relative to that of tap water.

### BRIEF DESCRIPTION OF THE DRAWINGS

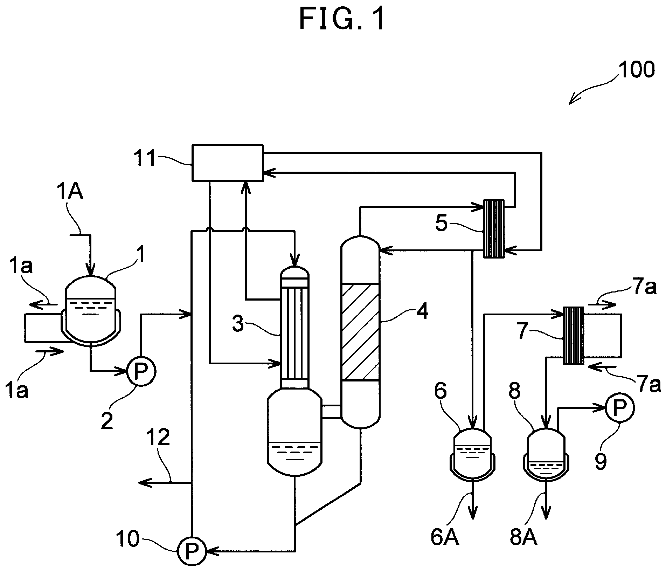

FIG. 1 is a schematic view to explain a vacuum evaporation apparatus according to one embodiment of the present invention.

### EMBODIMENT FOR CARRYING OUT THE INVENTION

The present invention provides a method for producing a purified hypochlorous acid aqueous solution, which comprises a step of extracting hypochlorous acid by subjecting a hypochlorous acid-containing water solution as a source liquid to vacuum evaporation at the temperature of 40°C or less, which hypochlorous acid-containing water solution contains impurity ions such as chlorine ion, sodium ion, and the like, for example. While a high-purity purified hypochlorous acid aqueous solution can be obtained in this way, this is believed to be the case because maintaining the temperature of the vacuum evaporation to 40°C or less suppresses the acceleration of the disproportionation reaction of hypochlorous acid and allows purification of a hypochlorous acid aqueous solution by vacuum evaporation without inducing the generation of a large amount of hydrogen chloride.

In the present specification, the term of "ion-less" means that, in a case the concentration of hypochlorous acid is 40 mg/L ± 10 mg/L, NaCl included in the hypochlorous acid aqueous solution is 10 mg/L or less and a total of other impurity ions is 15 mg/L or less.

In the present specification, the term of "ion-free" means that, in a case the concentration of hypochlorous acid is 40 mg/L ± 10 mg/L, the total of impurity ions included in the hypochlorous acid aqueous solution is as the conductivity of hypochlorous acid water 10 µS/cm (generally 5 mg/L) or less.

In the present specification, the term of "impurity ions" means ions included in an aqueous solution other than hypochlorous acid. Specifically, examples of such impurity ions include chlorine ion, sodium ion, and the like.

In the present specification, "the concentration of hypochlorous acid" means the concentration of HOCl, which can be determined using an iodine titration method. Moreover, the same value can be obtained also by using a colorimetric method (DPD method) or an absorbance method.

In the present specification, both "ppm" and "mg/L" are used as a unit of the concentration due to differences in measurement or calculation methods, but since the specific gravity of water is 1 (1 g/cm³) at 3.98°C, mg/L ≈ ppm (mg/kg), so that they are to be interchangeable.

Conventionally, a hypochlorous acid-containing water solution produced by various methods includes various impurity ions, negatively affecting the stability of hypochlorous acid. Therefore, it was found that the stability thereof could be further improved when the foreign ions were removed and the solution was made ion-free. By setting the concentration of impurities to be counter ions in the hypochlorous acid aqueous solution to be the equivalent concentration or less relative to that of dissociated hypochlorous acid ions, the decomposition rate of hypochlorous acid can be dramatically reduced.

For example, at the pH of 6.5 and the concentration of hypochlorous acid of 50 mg/L (0.97 mmol/L), the stability is dramatically improved when the concentration of impurity ions is 0.05 mmol/L or less.

Next with reference to the drawing, a preferred embodiment mode according to a method for producing a purified hypochlorous acid aqueous solution of the present invention and a preferred embodiment form according to a vacuum evaporation apparatus of the present invention will be specifically described with reference to the drawings, but this is not intended to limit the present invention to such embodiments.

### (Embodiment mode 1)

In Embodiment mode 1, as shown in FIG. 1, for example, a hypochlorous acid-containing water solution 1A to be a source liquid of the present invention is supplied to a pH adjustment tank 1, and the pH of the hypochlorous acid-containing water solution is adjusted. Next, the hypochlorous acid-containing water solution is supplied from the pH adjustment tank 1 to a heater circulation line by a supply pump 2, and is directed to the top of a heater 3 by a circulation pump 10. The vapor of hypochlorous acid being heated by hot water and evaporated in the heater 3 is subjected to mist separation in an evaporation can (distillation column) 4 and is extracted and is directed to a condenser 5. The solution cooled and condensed by cold water in the condenser 5 is partly returned to the evaporation can 4 as a return liquid, and the rest thereof is sent as a purified hypochlorous acid aqueous solution being the product to a liquid receiving tank 6 by a withdrawal pump (not shown). With the degree of vacuum being adjusted by a vacuum pump 9 connected to an after-condenser 7 located after the condenser 5, the evaporation temperature is adjusted to 40°C or less. With respect to hot water supplied to the heater 3, heat from cooling water used to cool the condenser 5 increasing in temperature while circulating in the condenser 5 is recovered in a heat pump 11, is made to be a heating source as the hot water, and is circulated and utilized while decreasing in temperature in the heater 3. The vapor of hypochlorous acid that does not condense in the condenser 5 is condensed by cooling water together with chlorine gas and hydrogen chloride gas (hydrochloric acid gas) in the after-condenser 7. Below, the above will be described in more detail.

### <Source liquid (hypochlorous acid-containing water solution)>

The hypochlorous acid-containing water solution to be the source liquid is to be a hypochlorous acid-containing water solution including impurity ions. A manufacturing method for the hypochlorous acid-containing water solution including the ions, such as a hypochlorous acid-containing water solution manufactured by mixing acidic electrolyzed water obtained by electrolyzing salt (NaCl, KCl, and the like) with alkaline, a hypochlorous acid-containing water solution manufactured by adding acid (hydrochloric acid, sulfuric acid, nitric acid, organic acids, and the like) to a hypochlorite (NaClO, KClO, and the like) solution is not particularly limited, so that any one of those hypochlorous acid-containing water solutions manufactured by the various methods described above can be used. Specifically, a hypochlorous acid-containing water solution obtained by an electrolysis method, namely an electrolysis method using a 3-chamber electrolytic tank, is preferably used.

As the dissociation constant (pKa) of hypochlorous acid is around 7.5, the pH of the hypochlorous acid-containing water solution being the source liquid is preferably 8.6 or less, more preferably between 5.0 and 8.6, further preferably between 5.0 and 6.3, and particularly preferably between 5.8 and 6.3. In a case that hypochlorous acid is dissociated and ionized in a liquid such as sodium hypochlorite (NaOCl) and the like, it is difficult to be extracted unless the solution is made into fine mist and a sublimation phenomenon is used. Therefore, in a case that hypochlorous acid is extracted using the vacuum evaporation method, hypochlorous acid needs to be present in non-dissociated form in the solution before filtration. However, in a case that the hypochlorous-acid containing water solution is an alkaline solution with the pH exceeding 7, the proportion of the dissociated hypochlorite ions is high, so that extraction by the evaporation method tends to be difficult, and in a case that hypochlorous acid is extracted at the pH exceeding 8.6, the extraction efficiency of hypochlorous acid tends to decrease. As a prior art, there is disclosed a method of extracting hypochlorous acid by making the pH of a hypochlorous acid aqueous solution acidic and the proportion of the non-dissociated hypochlorous acid 90% or more, but this not preferable because, when the pH is lowered, the concentration of hydrogen chloride in the distillation column increases and a large amount of hydrogen chloride is mixed into hypochlorous acid to be recovered.

As a result, in a case of extracting hypochlorous acid by the vacuum evaporation method, the pH is preferably 8.6 or less, and the extraction efficiency increases when the pH is no more than 7.5, which is the pH at which the presence ratio of the non-dissociated hypochlorous acid exceeds 50%. Moreover, it is desirable to control the pH to be between 5.0 and 6.5 to prevent the concentration of hydrogen chloride in the solution to be recovered from increasing and it is more desirable to set the pH to be between 5.8 and 6.3 since the proportion of non-dissociated hypochlorous acid is 90% or more and the activity of hydrogen chloride is kept low. The adjustment of the pH can also be performed in a pH adjustment tank coupled to a vacuum evaporation apparatus 100 as shown in FIG. 1, but the pH-adjusted source liquid can also be directly supplied to the heater 3. Considering the point of temperature control described below, it is preferably supplied from an apparatus for producing a hypochlorous acid-containing water solution being the source liquid to the pH adjustment tank 1, the temperature of which pH adjustment tank 1 is controlled, and, in which pH adjustment tank 1, the pH is adjusted.

The concentration of hypochlorous acid in the hypochlorous acid-containing water solution being the source liquid is desirably set to be 10,000 ppm or less, preferably in the range between 20 ppm and 10,000 ppm, more preferably in the range between 20 ppm and 1,000 ppm, and, to extract more stably, in the range between 500 ppm and 800 ppm. When the concentration of hypochlorous acid in the hypochlorous acid-containing water solution is low, the content of water being a solvent, relative to hypochlorous acid to be extracted, becomes too high, so that the higher the concentration of hypochlorous acid in the hypochlorous acid-containing water solution, the better. However, the concentration of hypochlorous acid therein being set to be too high makes it easier for hypochlorous acid to decompose during distillation and chlorine gas to increase, causing the purified hypochlorous acid aqueous solution after extraction to tend to be unstable, so that there is a tendency to make it easier to realize an ion-less or ion-free purified hypochlorous acid aqueous solution by setting the concentration of hypochlorous acid in the hypochlorous acid-containing water solution being the source liquid to be 10,000 ppm or less, and, moreover, 1,000 ppm or less.

The decomposition of hypochlorous acid is accelerated by heat. Hypochlorous acid molecules release oxygen (O) and start accelerating in converting to hydrogen chloride (HCl) when they exceed 30°C, so that the storage temperature of the hypochlorous acid-containing water solution being the source liquid from the time of producing to when it is supplied to an evaporation apparatus is preferably 25°C or less and more preferably 15°C or less.

As shown in FIG. 1 as 1A, preferably, the hypochlorous acid-containing water solution being the source liquid is first supplied to the pH adjustment tank 1 and the pH is adjusted to be in the above-described ranges. For this pH adjustment tank 1, by circulating cooling water 1a, the interior of the tank is set to be at preferably a low temperature of 30°C or less, more preferably of 25°C or less, further preferably of 20°C or less, and particularly preferably of 10°C or less. The lower limit of the temperature of the cooling water 1a is not particularly restricted, but 10°C is preferable and 15°C is more preferable in terms of cooling costs, and the adjustment temperature of a heat pump.

### <Operation method>

A method for producing a purified hypochlorous acid aqueous solution of the present invention is not particularly limited as long as it includes low-temperature evaporation, in other words, the step of evaporation at the temperature of 40°C or less, so that it can be set to be a batch operation or a continuous operation.

### <Heating of source liquid>

As described above, considering the decomposition of hypochlorous acid by heat, the evaporation temperature is set to be 40°C or less, preferably 30°C or less, and more preferably between 10°C and 15°C. To make evaporation possible at this temperature, the evaporation apparatus is to be held at the degree of vacuum equivalent to the vapor pressure of water.

A heat exchanger provided in the heater 3, which heat exchanger includes shell-and-tube, spiral, plate and frame, double pipe, jacket, and the like, but is not particular limited, and is preferably to be shell-and-tube.

The evaporation system can be selected from liquid film descent type, forced circulation type, thin film type, and the like, but is preferably to be liquid film descent type.

The heating method is not particularly limited, but setting it to be indirect heating with hot water is preferable in that it prevents hypochlorous acid from being deactivated by high temperature through direct contact with the heater. Hot water production, which can be performed by the use of a heat pump, steam, electric heating, and the like, is not particularly limited thereto, but the heat pump, from which an energy-saving effect can be expected, is more desirable. The temperature difference between the heating medium such as hot water and the like and a body to be heated, including hypochlorous acid, is preferably 15°C or less and more preferably 10°C or less.

The material of the heater 3 preferably is a material that is not corroded by hypochlorous acid and does not elute components, which material is not particularly limited. Specifically, titanium, two-layer stainless steel, an easily oxidizable metal such as, for example, iron, the surface of which metal is coated with a fluorine coating agent, a resin that does not contain polyamide that easily reacts with hypochlorous acid can be used.

### <Evaporation can (distillation column)>

A distillation column is preferably provided to increase the concentration of hypochlorous acid in a purified hypochlorous acid aqueous solution or to increase the recovery rate of hypochlorous acid.

The concentration of hypochlorous acid in the purified hypochlorous acid aqueous solution is preferably 1.1 times or more and more preferably 1.5 times or more relative to the concentration of hypochlorous acid in the hypochlorous acid-containing water solution being the source liquid.

The distillation column can be used without any limitations, and examples of the distillation column include continuous distillation columns such as plate type, filling type, spring type, and the like, for example. The distillation column can be used alone or in a combination of two or more columns. Fluororesins such as PFA (tetrafluoroethylene/perfluoalkoxy ethylene copolymer), polyolefins such as PP (polypropylene), and the like can be used as a filler for use in the filling distillation column. As for the material for such a filler, any material that is not corroded by hypochlorous acid can be used without any particular limitations.

### <Recovery of hypochlorous acid>

The recovery method of a purified hypochlorous acid aqueous solution is not particularly limited, so that recovery of a condensate by indirect cooling, recovery by gas absorption, and the like can be used. In FIG. 1, cooling water is circulated to the condenser 5, achieving condensation by indirect cooling. As shown in FIG. 1, using the heat pump 11, heat increasing in temperature in the condenser 5 is preferably circulated and utilized by using it in heating for hot water to the heater 3. Specifically, with the evaporation temperature being set to 15°C, cooling water at 7°C is used to cool the condenser 5 and the temperature thereof is increased to 12°C in the condenser 5 while circulating, the increased heat is recovered in the heat pump 11, is used to make hot water to be 23°C, which hot water is to be supplied to the heater as a heating source, and is circulated and utilized while decreasing in temperature to 18°C in the heater 3.

### <Partial condensation>

A purified hypochlorous acid aqueous solution recovered by the condenser 5 can be obtained as a distillate 6A, and, in a case that chlorine gas or hydrochloric acid gas is included in the vapor in the liquid receiving tank 6, the after-condenser 7 is provided for partial condensation. The distillate 8A to be obtained by partial condensation can be reused for re-evaporation if necessary.

### <Purified hypochlorous acid aqueous solution>

The pH of the purified hypochlorous acid aqueous solution is preferably 6.5 or less. To set the pH of the distillate 6A to be 5.8 or more and 6.5 or less, if necessary, the pH may be adjusted in an evaporation apparatus or the pH may be adjusted after taking the purified hypochlorous acid aqueous solution out of the apparatus.

The purified hypochlorous acid aqueous solution is preferably ion-less and more preferably ion-free, and, specifically, the concentration of impurity ions in the purified hypochlorous acid aqueous solution is, as Na ions (including other cations), preferably 5.0 ppm or less and more preferably 0.05 ppm or less.

The concentration of hypochlorous acid in the purified hypochlorous acid aqueous solution is preferably between 40 ppm and 10,000 ppm and more preferably between 50 ppm and 1,000 ppm.

The molar ratio of hypochlorous acid to impurity ions in the purified hypochlorous acid aqueous solution is preferably between 5:1 and 400:1 and more preferably between 100:1 and 1000:1.

### (Embodiment form 1)

As shown in FIG. 1, a vacuum evaporation apparatus according to Embodiment form 1 comprises a heater 3 to heat a hypochlorous acid-containing water solution 1A being a source liquid, an evaporation can 4, into which the vapor of hypochlorous acid water evaporated in the heater 3 is introduced, and a condenser 5, in which the vapor of hypochlorous acid water passing through the evaporation can 4 is cooled and condensed, the vacuum evaporation apparatus comprising a mechanism to maintain the evaporation temperature to be between 10°C and 40°C by adjusting, using a heat pump 11, the temperature of a circulating liquid circulating in the heater 3. The respective configurations and the preferred form are as explained in Embodiment mode 1.

Besides, in the present specification, the matters described in the above-described Embodiment mode 1 and Embodiment form 1, respectively, are to apply to each other to the extent that they do not contradict.

### EXAMPLE

### Example 1

A hypochlorous acid-containing water solution being a source liquid (the concentration of hypochlorous acid (HOCl): 500 ppm, the concentration of Na ion: 150 ppm, the concentration of other impurity ions: 15 ppm, pH: 6.0, temperature: 15°C) was supplied to a vacuum evaporation apparatus (having a configuration shown in FIG. 1) at a liquid supply rate of 1,000 kg/hr. This water solution was maintained at 15°C from producing to apparatus supply. Moreover, a supply tank (a pH adjustment tank) of the vacuum evaporation apparatus was also maintained at 15°C. Distillation was performed at the evaporation temperature of 15°C, the degree of vacuum of 1.7 kPa, and the condensation temperature of 5°C. The obtained purified hypochlorous acid aqueous solution had a distillate rate of 500 kg/hr, the concentration of hypochlorous acid of 800 ppm, the concentration of Na ion of 0.01 ppm, the concentration of other impurity ions of 1.5 ppm (the conductivity of 2.8 µS/cm), and the pH of 6.1.

### REFERENCE SIGNS LIST

100 VACUUM EVAPORATION APPARATUS
1 pH ADJUSTMENT TANK
2 SUPPLY PUMP
3 HEATER
4 EVAPORATION CAN/DISTILLATION COLUMN
5 CONDENSER
6 LIQUID RECEIVING TANK
7 AFTER-CONDENSER
8 SEPARATION TANK
9 VACUUM PUMP
10 CIRCULATION PUMP
11 HEAT PUMP
12 DRAINAGE
1A SOURCE LIQUID (HYPOCHLOROUS-ACID CONTAINING WATER SOLUTION)
1a, 7a COOLING WATER
6A DISTILLATE (PURIFIED HYPOCHLOROUS ACID AQUEOUS SOLUTION)
8A DISTILLATE

## Claims

1. A method for producing a purified hypochlorous acid aqueous solution, which comprises a step of extracting hypochlorous acid by subjecting a hypochlorous acid-containing water solution as a source liquid to vacuum evaporation at a temperature of 40°C or less.

2. The method according to claim 1, wherein a pH of the hypochlorous acid-containing water solution being the source liquid is between 5.0 and 8.6.

3. The method according to claim 1, wherein a temperature of the vacuum evaporation is between 10°C and 40°C.

4. The method according to claim 3, wherein the temperature of the vacuum evaporation is between 10°C and 30°C.

5. The method according to any one of claims 1 to 4, wherein a concentration of hypochlorous acid in the hypochlorous acid-containing water solution being the source liquid is 10,000 ppm or less.

6. A vacuum evaporation apparatus comprising a heater, an evaporation can, and a condenser to purify a hypochlorous acid-containing water solution, **characterized in that** the vacuum evaporation apparatus comprises a mechanism to control an evaporation temperature to between 10°C and 40°C.

7. The vacuum evaporation apparatus according to claim 6, comprising an after-condenser after the condenser.

8. A purified hypochlorous acid aqueous solution obtained by vacuum evaporation, wherein a pH is 6.5 or less, a concentration of hypochlorous acid in the aqueous solution is between 40 ppm and 10,000 ppm, and a concentration of impurity ions in the aqueous solution is 5.0 ppm or less.
